# EUROPEAN PATENT APPLICATION

(11) **EP 4 524 895 A1**
(43) Date of publication of application: **19.03.2025**
(21) Application number: 23910124.9
(22) Date of filing: 13.12.2023
(51) Int. Cl.: G06T 13/40

(54) **VIRTUAL CHARACTER-BASED INTERACTION METHOD, APPARATUS AND DEVICE AND STORAGE MEDIUM**

(30) Priority: 29.12.2022 CN 202211716368
(71) Applicant: Beijing Zitiao Network Technology Co., Ltd., Beijing 100190 (CN)
(72) Inventor: BI, Junlin, Beijing 100028 (CN); BAI, Yufeng, Beijing 100028 (CN); GUO, Haiyang, Beijing 100028 (CN); REN, Pingyuan, Beijing 100028 (CN); ZHOU, Bingjie, Beijing 100028 (CN); WANG, Lifu, Beijing 100028 (CN)
(74) Representative: Williams, Michael David
(86) International application number: PCT/CN2023/138311
(87) International publication number: WO 2024/140194

(57) **Abstract**

Provided in the present disclosure are a virtual character-based interaction method, apparatus and device and a storage medium. The method comprises: first, controlling in a virtual scene a virtual character of a first user to perform a preset first action; and then, during the process of the virtual character of the first user performing the preset first action, if it is detected that a preset first behavior event occurs between the virtual character of the first user and a virtual character of a second user, controlling in the virtual scene the virtual character of the first user and the virtual character of the second user to perform a preset interaction action.

## Description

### CROSS-REFERENCE TO RELATED APPLICATIONS

The present application is based on and claims priority to Chinese Patent Application No. 202211716368.9 filed on Dec. 29, 2022, the disclosure of which is incorporated by reference herein in its entirety.

### TECHNICAL FIELD

The present disclosure relates to the field of data processing, and in particular a virtual character-based interaction method, apparatus, and device, and a storage medium.

### BACKGROUND

Virtual characters refer to characters created in a physical display screen or virtual space by computer 2D drawing or 3D modeling technologies. In actual life, virtual characters can greatly enhance the experience of human-computer interaction.

With the continuous development of interaction technologies of virtual characters, the virtual character-based interactive functions are becoming more and more popular in various types of application software. Therefore, how to enrich the virtual character-based interactive functions so as to enhance the interactive experience of users for the virtual character, is an urgent technical problem to be solved at present.

### SUMMARY

In order to solve the above technical problem, an embodiment of the present disclosure provides a virtual character-based interaction method.

According to a first aspect, the present disclosure provides a virtual character-based interaction method, which comprises:
controlling in a virtual scene a virtual character of a first user to perform a preset first action;
in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action.

In one optional implementation, after the controlling in the virtual scene the virtual character of the first user and the virtual character of the second user to perform a preset interactive action, the method further comprises:
displaying an interaction prompt page; wherein the interaction prompt page is provided with an interaction entry;
in response to a trigger operation for the interaction entry, sending a first interactive message to the second user.

In one optional implementation, after the controlling in the virtual scene the virtual character of the first user and the virtual character of the second user to perform a preset interactive action, the method further comprises:
presenting an interactive animation corresponding to the preset interactive action on the interaction prompt page.

In one optional implementation, the method further comprises:
if it is detected that a preset second behavior event occurs between the virtual character of the first user and a virtual character of a third user, displaying preset prompt information on a virtual scene page corresponding to the virtual scene; wherein, the preset prompt information is configured for prompting the first user with regard to the preset second behavior event.

In one optional implementation, a user identification of the third user is displayed in the preset prompt information, and the method further comprises:
in response to a preset interaction trigger operation for the user identification of the third user, sending a second interactive message to the third user.

In one optional implementation, if it is detected that a preset second behavior event occurs between the virtual character of the first user and a virtual character of a third user, the displaying preset prompt information on a virtual scene page corresponding to the virtual scene comprises:
if it is detected that the preset second behavior event occurs between the virtual character of the first user and the virtual character of the third user, displaying preset prompt information with a marquee effect on the virtual scene page corresponding to the virtual scene.

In one optional implementation, the method further comprises:
presenting the virtual character of the first user and the virtual character of the second user respectively on a ranking list page according to a preset ranking order; wherein, the preset ranking order is determined based on the ranking of a progress of performing the preset first action by the virtual character of the first user and the virtual character of the second user in the virtual scene.

In one optional implementation, the method further comprises:
in response to a preset interaction trigger operation for a virtual character of a target user on the ranking list page, sending a third interactive message to the target user.

In one optional implementation, the preset first behavior event comprises that the virtual character of the first user exceeds the virtual character of the second user in the progress of the preset first action in the process of performing the preset first action.

According to a second aspect, the present disclosure provides a virtual character-based interaction apparatus, which comprises:
a first control module for controlling in a virtual scene a virtual character of a first user to perform a preset first action;
a second control module for, in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action.

According to a third aspect, the present disclosure provides a computer readable storage medium storing therein instructions which, when executed on a terminal device, cause the terminal device to implement the above method.

According to a fourth aspect, the present disclosure provides a virtual character-based interaction device, comprising: a memory, a processor, and a computer program which is stored on the memory and executable on the processor, wherein the processor, when executing the computer program, implements the above method.

According to a fifth aspect, the present disclosure provides a computer program product comprising a computer program/instructions which, when executed by a processor, implement the above method.

Compared with the prior art, the technical solutions provided by the embodiments of the present disclosure have at least the following advantages:
the embodiment of the present disclosure provides a virtual character-based interaction method, comprising: firstly, controlling in a virtual scene a virtual character of the first user to perform the preset first action; then, in the process that the virtual character of the first user performs the preset first action, if it is detected that a preset first behavior event occurs between the virtual character of the first user and the virtual character of the second user, controlling in the virtual scene the virtual character of the first user and the virtual character of the second user to perform a preset interactive action.

### BRIEF DESCRIPTION OF THE DRAWINGS

The accompanying drawings, which are incorporated into and constitute a part of the present specification, illustrate embodiments consistent with the present disclosure and together with the specification, serve to explain the principles of the present disclosure.

In order to explain the technical solutions in the embodiments of the present disclosure or in the prior art more clearly, the drawings needed in the description of the embodiments or the prior art will be briefly introduced below. Obviously, for those skilled in the art, other drawings can be obtained according to these drawings without inventive effort.
Fig. 1 is a flow diagram of a virtual character-based interaction method provided by an embodiment of the present disclosure;
Fig. 2 is a schematic diagram of a virtual scene page provided by an embodiment of the present disclosure;
Fig. 3 is a schematic diagram of another virtual scene page provided by an embodiment of the present disclosure;
Fig. 4 is a schematic diagram of an interaction prompt page provided by an embodiment of the present disclosure;
Fig. 5 is a schematic diagram of another virtual scene page provided by an embodiment of the present disclosure;
Fig. 6 is a schematic diagram of a ranking list page provided by an embodiment of the present disclosure;
Fig. 7 is a schematic structural diagram of a virtual character-based interaction apparatus provided by an embodiment of the present disclosure;
Fig. 8 is a schematic structural diagram of a virtual character-based interaction device provided by an embodiment of the present disclosure.

### DETAILED DESCRIPTION

In order to understand the above objects, features and advantages of the present disclosure more clearly, the solutions of the present disclosure will be further described below. It should be noted that the embodiments of the present disclosure and the features in the embodiments can be combined with each other without conflict.

In the following description, many specific details are set forth in order to fully understand the present disclosure, but the present disclosure can be implemented in ways other than those described herein. Obviously, the embodiments in the specification are only part of the embodiments of the present disclosure, not all of them.

In order to meet the diverse needs of users for virtual character-based interactive functions, an embodiment of the disclosure provides a virtual character-based interaction method, comprising: firstly, controlling in a virtual scene a virtual character of a first user to perform a preset first action; then, in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action. It can be seen that the embodiment of the present disclosure can realize the function of controlling the virtual character to perform the preset interactive action when the preset first behavior event is detected in the virtual scene, which enriches the virtual character-based interactive functions and then improves the interactive experience of users for the virtual character.

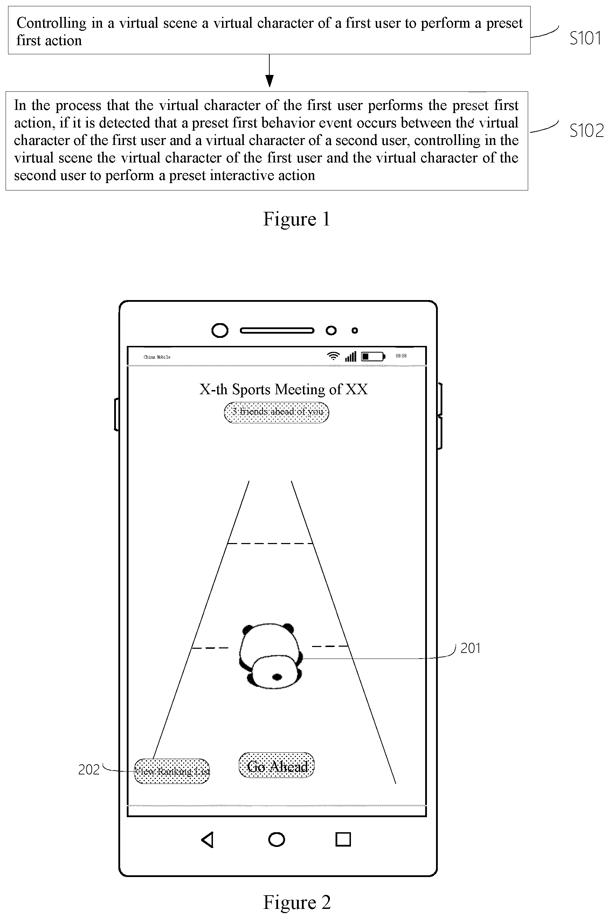

In view of this, an embodiment of the present disclosure provides a virtual character-based interaction method. Referring to Fig. 1, it is a flow diagram of a virtual character-based interaction method provided by an embodiment of the present disclosure, and the method includes:
S101: controlling in a virtual scene a virtual character of a first user to perform a preset first action.

The video processing method provided by the embodiment of the present disclosure can be applied to clients, for example, clients can include clients deployed on smart phones, clients deployed on tablet computers, and the like.

In the embodiment of the present disclosure, the virtual scene refers to a digitalized scene built by computer 2D drawing or 3D modeling technologies. In actual applications, the virtual scene can include a virtual stadium, a virtual city and the like.

In the embodiment of the present disclosure, the virtual character refers to an character created in a virtual scene by computer 2D drawing or 3D modeling technologies, which can include a virtual person character, a virtual animal character, a virtual cartoon character and the like.

In the embodiment of the present disclosure, the first user can be a user currently logging in at the client. The virtual character of the first user can be a virtual character preset for the first user at the client, for example a preset virtual rabbit character related to festivals. The virtual character of the first user can also be a virtual character generated based on an character generation page, for example a virtual character generation function can be realized through an character creation operation and the like acting on the character generation page for each part.

In the embodiment of the present disclosure, the preset first action can be an action preset based on a virtual scene. For example, assuming that the virtual scene is a virtual track pre-built by a computer, the preset first action performed by the virtual character of the first user can be a running action on the virtual track. As shown in Fig. 2, it is a schematic diagram of a virtual scene page provided by an embodiment of the present disclosure, in which a virtual character 201 of a first user is controlled to perform a running action on a virtual track.

In an optional implementation, assuming that the virtual scene is a virtual city pre-built by a computer, the preset first action corresponding to the virtual character of the first user can also be an action of looking for a red envelope in the virtual city. By controlling the virtual character of the first user to perform the preset first action in the virtual scene, the virtual character-based interactive functions are enriched.

S102, in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action.

In the embodiment of the present disclosure, the second user can be any user in the same virtual scene as the first user, and the second user can have a preset association relationship with the first user, such as a friend relationship.

In the embodiment of the present disclosure, the preset first behavior event occurring between the virtual character of the first user and the virtual character of the second user can include that the virtual character of the first user exceeds the virtual character of the second user in the progress of the preset first action in the process of performing the preset first action.

In an optimal implementation, in the process of controlling the virtual character of the first user to perform the preset first action in the virtual scene, various events occurring between the virtual character of the first user and the virtual character of the second user are detected. When it is detected that the virtual character of the first user exceeds the virtual character of the second user in the progress of the preset first action in the process of performing the preset first action, the virtual character of the first user and the virtual character of the second user are controlled to perform the preset interactive action in the virtual scene.

In the embodiment of the present disclosure, the preset interactive action can include an interactive action preset for the virtual character of the first user and the virtual character of the second user, such as a greeting action, a dancing action, and the like preset for the virtual character of the first user and the virtual character of the second user.

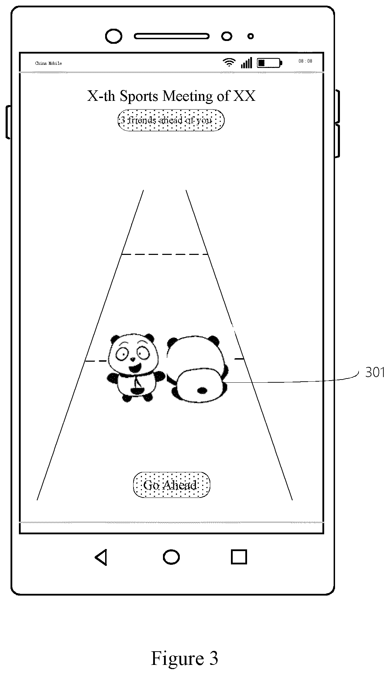

For example, assuming that the virtual scene is a virtual track pre-built by a computer, in the process of controlling the virtual character of the first user to perform a running action (i.e., a preset first action) on the virtual track, if it is detected that the virtual character of the first user exceeds the virtual character of the second user in the progress of the running action, the virtual character of the first user and the virtual character of the second user are controlled in the virtual track shown in Fig. 3 to perform a preset interactive action 301, such as a greeting action, wherein Fig. 3 is a schematic diagram of another virtual scene page provided by an embodiment of the present disclosure.

In actual applications, in order to further enrich the virtual character-based interactive functions so as to improve the interactive experience of users for the virtual character, an interaction prompt page can also be displayed after the virtual character of the first user and the virtual character of the second user are controlled to perform the preset interactive action in the virtual scene, which is convenient for the current user to send an interactive message to other users based on the interaction prompt page.

In the embodiment of the present disclosure, the interaction prompt page can also be provided with an interaction entry, so when a trigger operation for the interaction entry is received, the first interactive message can also be sent to the second user.

In the embodiment of the present disclosure, the trigger operation for the interaction entry can include a click operation, a long press operation, and the like acting on the interaction entry to realize the function of sending the first interactive message to the second user.

In the embodiment of the present disclosure, when the trigger operation for the interaction entry is received, the first interactive message can be sent to the second user on a conversation page, wherein the first interactive message can include a preset festival blessing message, a greeting message, and the like. For example, the festival blessing message can be the words of "Happy New Year!".

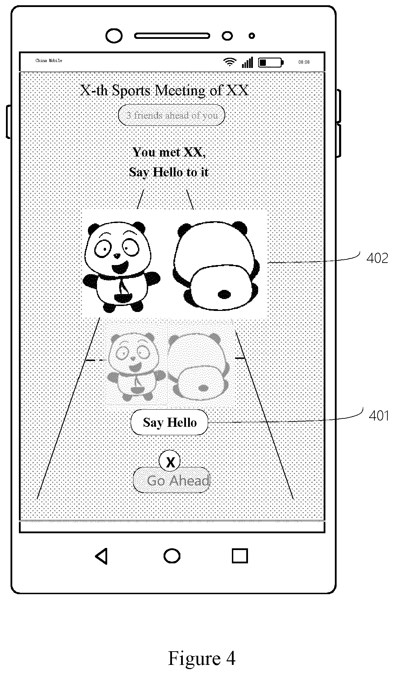

In optional implementation, in order not to affect the virtual character of the first user to continue to perform the preset first action in the virtual scene, an interaction prompt page can also be displayed by means of a masked page on the virtual scene page corresponding to the virtual scene, as shown in Fig. 4, which is a schematic diagram of an interaction prompt page provided by an embodiment of the present disclosure, wherein the interaction prompt page is provided with an interaction entry 401, and when a trigger operation for the interaction entry 401 is received, the first interactive message is sent to the second user on the conversation page.

In another optional implementation, in order to further enrich the virtual character-based interactive functions, an interactive animation corresponding to the preset interactive action can also be presented on the interaction prompt page. Specifically, after the virtual character of the first user and the virtual character of the second user are controlled to perform the preset interactive action in the virtual scene, as shown in Fig. 4, an interactive animation 402 corresponding to the preset interactive action is presented on the interaction prompt page. The interactive animation corresponding to the preset interactive action can include a greeting action, a dancing action and the like.

In another optional implementation, preset prompt information, such as the words "You met XX, say hello to Him", can also be displayed on the interaction prompt page, so as to prompt the first user of the trigger operation for the interaction entry, so as to realize sending the first interactive message to the second user.

The virtual character-based interaction method provided by the embodiment of the present disclosure comprises: firstly, controlling in a virtual scene a virtual character of a first user to perform a preset first action; then, in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action. It can be seen that the embodiment of the present disclosure can realize the function of controlling the virtual character to perform the preset interactive action when the preset first behavior event is detected in the virtual scene, which enriches the virtual character-based interactive functions and then improves the interactive experience of users for the virtual character.

In actual applications, in order to further enrich the virtual character-based interactive functions, the embodiment of the present disclosure can also display preset prompt information on the virtual scene page corresponding to the virtual scene when it is detected that a preset second behavior event occurs between the virtual character of the first user and the virtual character of the third user.

In the embodiment of the present disclosure, the third user can be any user in the same virtual scene as the first user. The third user and the second user can be users of the same client or users of different clients.

In the embodiment of the present disclosure, the preset second behavior event can include that the virtual character of the third user exceeds the virtual character of the first user in the progress of the preset first action in the process of performing the preset first action. For example, in the process that the virtual character of the first user performs the running action on the virtual track, if it is detected that the running progress of the virtual character of the third user exceeds that of the first user, the preset prompt information is displayed on the virtual scene page corresponding to the virtual scene of the first user.

In the embodiment of the present disclosure, the preset prompt information can be used to prompt the first user for the preset second behavior event, such as the words "XX just passed you with one click acceleration", so as to prompt the first user that the running progress of the virtual character of the third user exceeds that of the virtual character of the first user.

In one optional implementation, when it is detected that a preset second behavior event occurs between the virtual character of the first user and the virtual character of the third user, preset prompt information can also be displayed with a marquee effect on the virtual scene page corresponding to the virtual scene.

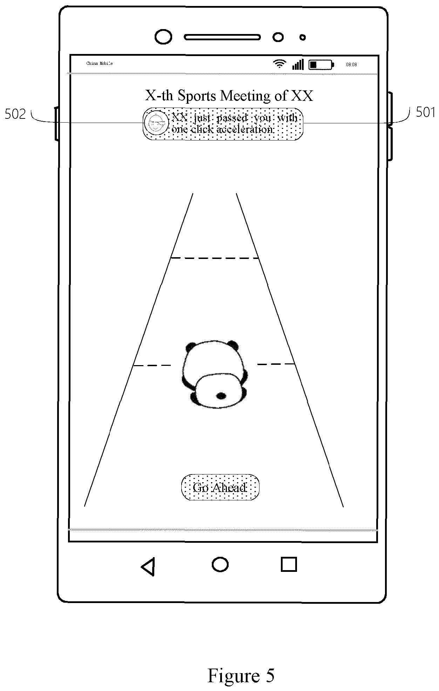

For example, as shown in Fig. 2, in the process of controlling the first user to perform the preset first action in the virtual scene, if it is detected that the virtual character of the third user exceeds the virtual character of the first user in the progress of the preset first action, preset prompt information 501 is zoomed in and displayed on the virtual scene page corresponding to the virtual scene shown in Fig. 5. Fig. 5 is a schematic diagram of another virtual scene page provided by an embodiment of the present disclosure, which thus is convenient for the first user to quickly know that the virtual character of the third user exceeds the virtual character of the first user in the progress of the preset first action.

In another optional implementation, in order not to affect the virtual character-based experience of the first user, the timing can also be started when the preset prompt information is displayed with the marquee effect on the virtual scene page corresponding to the virtual scene, and the display of the preset prompt information can be zoomed out when the timing duration reaches a preset duration. For example, assuming that the preset duration is 3 seconds, when the preset prompt information 501 is displayed on the virtual scene page corresponding to the virtual scene shown in Fig. 5, the timing is started from the 0 second, and when the timing duration reaches 5 seconds, the display of the preset prompt information is zoomed out, that is, the display page shown in Fig. 2 is restored.

In actual applications, in the process of displaying the preset prompt information on the virtual scene page corresponding to the virtual scene, a user identification of a third user can also be displayed in the preset prompt information, and correspondingly, when the preset trigger operation for the user identification of the third user is received, a second interactive message can be sent to the third user.

In the embodiment of the present disclosure, the user identification of the third user can include a user profile picture, a user name and the like of the third user, and the preset trigger operation for the user identification of the third user can include a click operation, a slide operation and the like acting on the user profile picture and the user name of the third user.

In the embodiment of the present disclosure, the second interactive message can include a preset festival blessing message, an interactive message, and the like. For example, when a click operation acting on a user profile picture 502 of the third user is received, an interactive message of "poke it" is displayed on a conversation page between the first user and the third user.

In the virtual character-based interaction method provided by the embodiment of the present disclosure, when it is detected that the preset second behavior event occurs between the virtual character of the first user and the virtual character of the third user, the preset prompt information can also be displayed on the virtual scene page corresponding to the virtual scene, which thus further enriches the virtual character-based interactive functions and improves the interactive experience of users for the virtual character.

In actual applications, in order to further enrich the virtual character-based interactive functions, a ranking list presentation entry can also be displayed on the virtual scene page. When a trigger operation for the ranking list presentation entry is received, it jumps from the virtual scene jumps to the ranking list page, and the virtual character of the first user and the virtual character of the second user are respectively displayed on the ranking list page according to a preset ranking order, so that the first user can know the ranking information of the progress of performing the preset first action by the virtual character of the first user and the virtual character of the second user in the virtual scene based on the ranking list page.

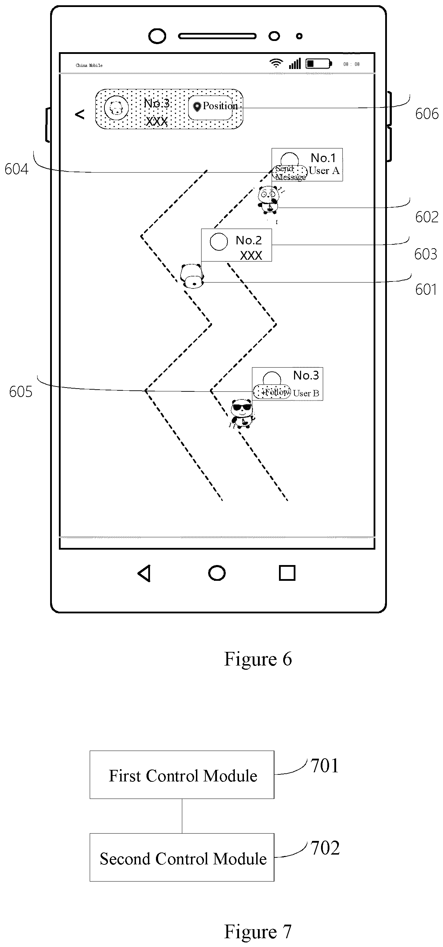

For example, as shown in Fig. 2, when a trigger operation for a ranking list presentation entry 202 on the virtual scene page is received, the virtual scene page shown in Fig. 2 jumps to the ranking list page shown in Fig. 6. Fig. 6 is a schematic diagram of a ranking list page provided by an embodiment of the present disclosure, and a virtual character 601 of the first user is in the second place on the ranking list page, and a virtual character 602 of second user A is in the first place on the ranking list page.

In the embodiment of the present disclosure, the preset ranking order is determined based on the ranking of the progress of performing the preset first action by the virtual character of the first user and the virtual character of the second user in the virtual scene. For example, assuming that the progress of performing the preset first action by the virtual character of the first user in the virtual scene is faster and the progress of performing the preset first action by the virtual character of the second user is slower, it can be determined that the ranking order of the virtual character of the first user and the virtual character of the second user are NO.1 and No.2 respectively.

In one optional implementation, ranking information of each of the users, including ranking information corresponding to the virtual character of the first user and ranking information corresponding to the virtual character of the second user, in the virtual scene can also be respectively presented in the style of, for example, flags on the ranking list page according to the preset ranking order. As shown in Fig. 6, specific ranking information, such as the displayed word "No.2", is presented on a flag 603 corresponding to the virtual character of the first user.

In the embodiment of the present disclosure, when the virtual character of each of the users is presented on the ranking list page according to the preset ranking order, a third interactive message can also be sent to the target user in response to a preset interaction trigger operation for the virtual character of the target user on the ranking list page.

In the embodiment of the present disclosure, when the preset interaction trigger operation for the virtual character of any user other than the first user on the ranking list page is received, the user is determined as the target user, and the function of sending the third interactive message to the target user is realized.

In the embodiment of the present disclosure, the third interactive message can include a festival blessing message, a greeting message and the like displayed on the conversation page of the target user.

In one optional implementation, the preset interaction trigger operation for the virtual character of the target user can include a click operation acting on an interaction control corresponding to the virtual character of the target user. For example, when a click operation for an interaction control 604 corresponding to the target user A on the ranking list page is received, the third interactive message is sent to the target user A.

In another optional implementation, when the preset interaction trigger operation for the virtual character of the target user on the ranking list page is received, whether the target user is a user not followed by the first user is firstly determined, and if it is determined that the target user is a user not followed by the first user, a preset interactive relationship between the first user and the target user is established.

In the embodiment of the present disclosure, the preset interactive relationship between the first user and the target user can include determining the target user as a followed object of the first user. For example, as shown in Fig. 6, when a trigger operation for an interaction control 605 corresponding to the target user on the ranking list page is received, target user B is determined as a followed object of the first user, which thus realizes the function of establishing the preset interactive relationship between the first user and the target user.

In one optional implementation, a positioning control 606 can also be presented on the ranking list page. Therefore, when a trigger operation for the positioning control 606 is received, a presentation position of the virtual character of the first user can be quickly positioned, which thus is convenient for the first user to quickly know the presentation position information and ranking information of the corresponding virtual character on the ranking list page.

In the virtual character-based interaction method provided by the embodiment of the present disclosure, it also can jump from the virtual scene page corresponding to the virtual scene to the ranking list page, and the virtual character of the first user and the virtual character of the first user are respectively presented on the ranking list page according to the preset ranking order. The ranking order of the first user and the second user can be reflected through the presentation positions of the virtual characters. Then, the function of sending the third interactive message to the target user is realized in response to the preset interaction trigger operation for the virtual character of the target user on the ranking list page, which thus further enriches the virtual character-based interactive functions and improves the interactive experience of the users for the virtual character.

Based on the above method embodiment, the present disclosure also provides a virtual character-based interaction apparatus. Referring to Fig. 7, it is a schematic structural diagram of a virtual character-based interaction apparatus provided by an embodiment of the present disclosure, and the apparatus includes:
a first control module 701 for controlling in a virtual scene a virtual character of a first user to perform a preset first action;
a second control module 702 for, in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action.

In one optional implementation, the apparatus further includes:
a first display module for displaying an interaction prompt page; wherein the interaction prompt page is provided with an interaction entry;
a first sending module for, in response to a trigger operation for the interaction entry, sending a first interactive message to the second user.

In one optional implementation, the apparatus further includes:
a first presentation module for presenting an interactive animation corresponding to the preset interactive action on the interaction prompt page.

In one optional implementation, the apparatus further includes:
a second display module for, if it is detected that a preset second behavior event occurs between the virtual character of the first user and a virtual character of a third user, displaying preset prompt information on a virtual scene page corresponding to the virtual scene; wherein, the preset prompt information is used for prompting the first user with regard to the preset second behavior event.

In one optional implementation, a user identification of the third user is displayed in the preset prompt information, and the apparatus further includes:
a second sending module for, in response to a preset interaction trigger operation for the user identification of the third user, sending a second interactive message to the third user.

In one optional implementation, the second display module includes:
a display sub-module for, if it is detected that a preset second behavior event occurs between the virtual character of the first user and a virtual character of a third user, displaying the preset prompt information with a marquee effect on the virtual scene page corresponding to the virtual scene.

In one optional implementation, the apparatus further includes:
a second presentation module for presenting the virtual character of the first user and the virtual character of the second user respectively on a ranking list page according to a preset ranking order; wherein, the preset ranking order is determined based on the ranking of the progress of performing the preset first action by the virtual character of the first user and the virtual character of the second user in the virtual scene.

In one optional implementation, the apparatus further includes:
a third sending module for, in response to a preset interaction trigger operation for a virtual character of a target user on the ranking list page, sending a third interactive message to the target user.

In one optional implementation, the preset first behavior event comprises that the virtual character of the first user exceeds the virtual character of the second user in the progress of the preset first action in the process of performing the preset first action.

The virtual character-based interaction apparatus provided by the embodiment of the present disclosure comprises: firstly, controlling in a virtual scene a virtual character of a first user to perform a preset first action; then, in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action. It can be seen that the embodiment of the present disclosure can realize the function of controlling the virtual character to perform the preset interactive action when the preset first behavior event is detected in the virtual scene, which enriches the virtual character-based interactive functions and then improves the interactive experience of users for the virtual character.

In addition to the above method and apparatus, an embodiment of the present disclosure also provides a computer readable storage medium storing therein instructions which, when executed on a terminal device, cause the terminal device to implement the virtual character-based interaction method described in the embodiment of the present disclosure.

An embodiment of the present disclosure also provides a computer program product comprising a computer program/instructions which, when executed by a processor, implement the virtual character-based interaction method described in the embodiment of the disclosure.

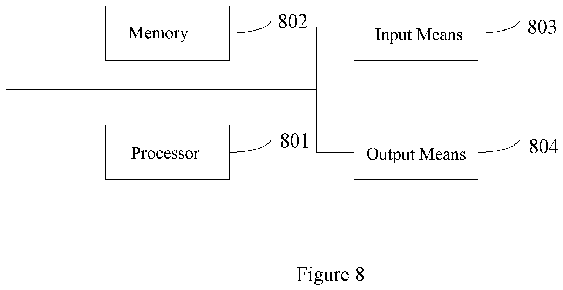

In addition, an embodiment of the present disclosure also provides a virtual character-based interaction device, as shown in Fig. 8, which can include:
a processor 801, a memory 802, an input means 803 and an output means 804. The virtual character-based interaction device can include one or more processors 801, and one processor is taken as an example in Fig. 8. In some embodiments of the present disclosure, the processor 801, the memory 802, the input means 803 and the output means 804 can be connected by a bus or other means. In Fig. 8, the connection by a bus is taken as an example.

The memory 802 can be used for storing software programs and modules, and the processor 801 executes various functional applications and data processing of the virtual character-based interaction device by operating the software programs and modules stored in the memory 802. The memory 802 can mainly include a program storage area and a data storage area, wherein the program storage area can store an operating system, application programs required by at least one function, and the like. In addition, the memory 802 can include a highspeed random access memory, and can also include a non-volatile memory, such as at least one disk memory device, flash memory device, or other volatile solid-state memory devices. The input means 803 can be used for receiving input digital or character information and generating a signal input related to user settings and function control of the virtual character-based interaction device.

Specifically, in the present embodiment, the processor 801 will load executable files corresponding to the processes of one or more application programs above into the memory 802 according to the following instructions, and the application programs stored in the memory 802 will be operated by the processor 801, thus realizing various functions of the above-mentioned virtual character-based interaction device.

It should be noted that, relational terms such as "first" and "second" herein are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed, or elements inherent to such process, method, article or device. Without further restrictions, an element defined by the phrase "including one" does not exclude the existence of other identical elements in the process, method, article or device including the element.

What has been described above is only the specific implementations of the present disclosure, so that those skilled in the art can understand or implement the present disclosure. Many modifications to these embodiments will be obvious to those skilled in the art, and the general principles defined herein can be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A virtual character-based interaction method, which comprises:
controlling in a virtual scene a virtual character of a first user to perform a preset first action;
in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action.

2. The method according to Claim 1, wherein, after the controlling in the virtual scene the virtual character of the first user and the virtual character of the second user to perform a preset interactive action, the method further comprises:
displaying an interaction prompt page; wherein the interaction prompt page is provided with an interaction entry;
in response to a trigger operation for the interaction entry, sending a first interactive message to the second user.

3. The method according to Claim 2, wherein, after the controlling in the virtual scene the virtual character of the first user and the virtual character of the second user to perform a preset interactive action, the method further comprises:
presenting an interactive animation corresponding to the preset interactive action on the interaction prompt page.

4. The method according to Claim 1, wherein, the method further comprises:
if it is detected that a preset second behavior event occurs between the virtual character of the first user and a virtual character of a third user, displaying preset prompt information on a virtual scene page corresponding to the virtual scene; wherein, the preset prompt information is configured for prompting the first user with regard to the preset second behavior event.

5. The method according to Claim 4, wherein, a user identification of the third user is displayed in the preset prompt information, and the method further comprises:
in response to a preset interaction trigger operation for the user identification of the third user, sending a second interactive message to the third user.

6. The method according to Claim 4, wherein, if it is detected that a preset second behavior event occurs between the virtual character of the first user and a virtual character of a third user, the displaying preset prompt information on a virtual scene page corresponding to the virtual scene comprises:
if it is detected that a preset second behavior event occurs between the virtual character of the first user and the virtual character of the third user, displaying the preset prompt information with a marquee effect on the virtual scene page corresponding to the virtual scene.

7. The method according to Claim 1, wherein, the method further comprises:
presenting the virtual character of the first user and the virtual character of the second user respectively on a ranking list page according to a preset ranking order; wherein, the preset ranking order is determined based on the ranking of the progress of performing the preset first action by the virtual character of the first user and the virtual character of the second user in the virtual scene.

8. The method according to Claim 7, wherein, the method further comprises:
in response to a preset interaction trigger operation for a virtual character of a target user on the ranking list page, sending a third interactive message to the target user.

9. The method according to Claim **1,** wherein, the preset first behavior event comprises that the virtual character of the first user exceeds the virtual character of the second user in the progress of the preset first action in the process of performing the preset first action.

10. A virtual character-based interaction apparatus, which comprises:
a first control module for controlling in a virtual scene a virtual character of a first user to perform a preset first action;
a second control module for, in the process that the virtual character of the first user performs the preset first action, if it is detected that a preset first behavior event occurs between the virtual character of the first user and a virtual character of a second user, controlling in the virtual scene the virtual character of the first user and the virtual character of the second user to perform a preset interactive action.

11. A computer readable storage medium storing therein instructions which, when executed on a terminal device, cause the terminal device to implement the method according to any one of Claims 1 to 9.

12. A virtual character-based interaction device, comprising: a memory, a processor, and a computer program which is stored on the memory and executable on the processor, wherein the processor, when executing the computer program, implements the method according to any one of Claims 1 to 9.

13. A computer program product comprising a computer program which, when executed by a processor, implements the method according to any one of Claims 1 to 9.
